# EUROPEAN PATENT APPLICATION

(11) **EP 4 401 208 A1**
(43) Date of publication of application: **17.07.2024**
(21) Application number: 23215111.8
(22) Date of filing: 07.12.2023
(51) Int. Cl.: H01M 50/107, H01M 50/152, H01M 50/342, H01M 50/578

(54) **CYLINDRICAL SECONDARY BATTERY**

(30) Priority: 16.01.2023 KR 20230006132
(71) Applicant: Samsung SDI Co., Ltd., Yongin-si, Gyeonggi-do 17084 (KR)
(72) Inventor: KIM, Dae Kyu, 17084 Yongin-si (KR)
(74) Representative: Marks & Clerk LLP

(57) **Abstract**

A cylindrical secondary battery includes an electrode assembly, a can having a cylindrical shape accommodating the electrode assembly, and a cap assembly coupled to the can, electrically connected to the electrode assembly, and insulated from the can. The cap assembly includes a cap-up exposed to the outside, a cap-down supporting the cap-up, and an insulator made of an insulating material between the cap-up and the cap-down. The cap-up includes piercing holes and bridges between the piercing holes. The bridges have different angles or widths between both ends. A compressive strength of the cap-up can be adjusted by controlling an angle, width, and number of main bridges and sub-bridges of the cap-up. The piercing holes and the sub-bridges enable gas to be discharged from the secondary battery.

## Description

### BACKGROUND

### 1. Field

Embodiments of the present disclosure relate to a secondary battery in which a structure of a cap assembly is improved.

### 2. Description of the Related Art

In general, a cylindrical secondary battery includes an electrode assembly having a cylindrical shape, a can having a cylindrical shape and accommodating the electrode assembly and an electrolyte, and a cap assembly coupled to an upper opening of the can to seal the can and allow a current generated by the electrode assembly to flow to an external device.

The cap assembly may include a cap-up, a vent plate, and a cap-down, and an insulator for insulating may be provided between the vent plate and the cap-down. A notch is formed in the vent plate to be fractured if gas is generated due to an increase in internal pressure of the secondary battery. The gas discharged through the notch escapes to the outside of the secondary battery through a piercing hole formed to pass through the cap-up. However, because internal gas can be discharged only through the piercing hole, it is difficult to quickly discharge the gas. Therefore, there is a need to secure a passage for quickly discharging internal gas if the internal gas is discharged, while maintaining appropriate compressive strength for securing the reliability of a secondary battery.

The above information disclosed in this background section is only for enhancement of understanding of the background of the disclosure and therefore it may contain information that does not constitute the related art.

### SUMMARY

Embodiments of the present disclosure provide a cylindrical secondary battery including a cap assembly capable of providing a gas discharge passage while maintaining necessary compressive strength.

A cylindrical secondary battery according to an embodiment of the present disclosure includes an electrode assembly, a can having a cylindrical shape that accommodates the electrode assembly, and a cap assembly coupled to the can, electrically connected to the electrode assembly, and insulated from the can. The cap assembly includes a cap-up exposed to the outside, a cap-down supporting the cap-up, and an insulator made of an insulating material between the cap-up and the cap-down. The cap-up includes a number of piercing holes and a number of bridges between the piercing holes. The bridges have two or more different angles or two or more different widths.

The bridges may include one or more main bridges and one or more sub-bridges.

The bridges may include a number of main bridges and a smaller number of sub-bridges than the main bridges.

The bridges may include a number of sub-bridges and a smaller number of main bridges than the sub-bridges.

An angle between ends of the main bridge may be greater than an angle between ends of the sub-bridge.

The main bridges and the sub-bridges may be spaced apart from each other at equal intervals.

The main bridges and the sub-bridges may be spaced apart from each other at different intervals.

The cap assembly further may include a vent plate between the cap-up and the cap-down, spaced apart from the cap-down, and having one or more notches.

At least some of the notches may be formed to correspond to positions of the sub-bridges.

At least some of the above and other features of the invention are set out in the claims.

### BRIEF DESCRIPTION OF DRAWINGS

FIG. 1 is a perspective view illustrating a cylindrical secondary battery according to one embodiment of the present disclosure.
FIG. 2A is a cross-sectional view of the cylindrical secondary battery of FIG. 1.
FIG. 2B is an enlarged partial view of FIG. 2A.
FIG. 2C is a partial cross-sectional view illustrating a cylindrical secondary battery according to another embodiment.
FIGS. 3 to 6 are plan views illustrating cap-ups according to various embodiments of the present disclosure.
FIG. 7 is a side cross-sectional view of the cap-up of FIGS. 3 to 6.

### DETAILED DESCRIPTION

Embodiments of the present disclosure are provided to describe the present disclosure more completely to those having ordinary skill in the art. The following embodiments may be modified into various different forms, and the scope of the present disclosure is not limited to the following embodiments. Rather, the embodiments are provided so that the present disclosure will be thorough and complete and will convey the concept of the present disclosure to those skilled in the art.

In addition, in the accompanying drawings, the thickness and size of each layer are exaggerated for convenience of description and clarity. Like reference numerals refer to like elements. As used herein, the term "and/or" includes any and all combinations of one or more of the associated listed items. In addition, in the present specification, it will be understood that, when a member A is referred to as being "connected to" a member B, the member A may be directly connected to the member B or an intervening member C may be present therebetween such that the member A and the member B are indirectly connected to each other.

The terminology used herein is for the purpose of describing particular embodiments only and is not intended to limit the present disclosure. As used herein, the singular forms are intended to include the plural forms as well, unless the context clearly indicates otherwise. It will be further understood that the terms "comprise or include" and/or "comprising or including," when used in this specification, specify the presence of stated shapes, numbers, steps, operations, members, elements, and/or groups thereof but do not preclude the presence or addition of one or more other shapes, numbers, steps, operations, members, elements, and/or groups thereof.

It is apparent that, although the terms "first," "second," and the like are used herein to describe various members, parts, regions, layers, and/or portions, these members, parts, regions, layers, and/or portions are not limited by these terms. These terms are only used to distinguish one member, part, region, layer, or portion from another member, part, region, layer, or portion. Accordingly, a first member, part, region, layer, or a portion which will be described below may indicate a second member, part, region, layer, or portion without deviating from teachings of the present disclosure.

Spatially relative terms, such as "beneath," "below," "lower," "above," "upper," "upward," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the drawings. For example, if the device in the drawings is turned over, elements or features described as "below" or "beneath" other elements or features would then be oriented "above" or "over" the other elements or features. Thus, the term "below" can encompass both an orientation of "above" and "below."

Hereinafter, a cylindrical secondary battery according to an embodiment of the present disclosure will be described in detail with reference to the accompanying drawings.

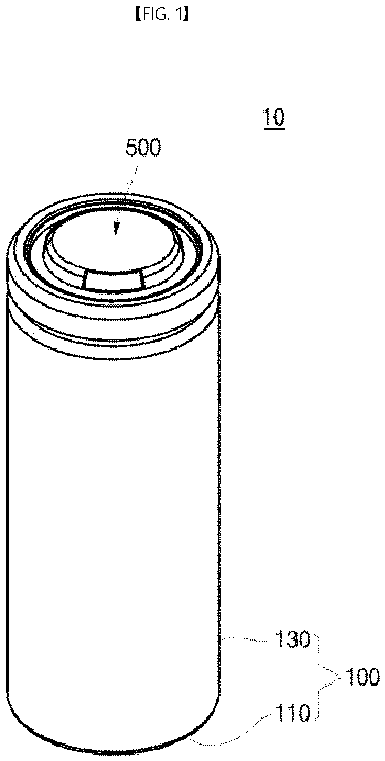

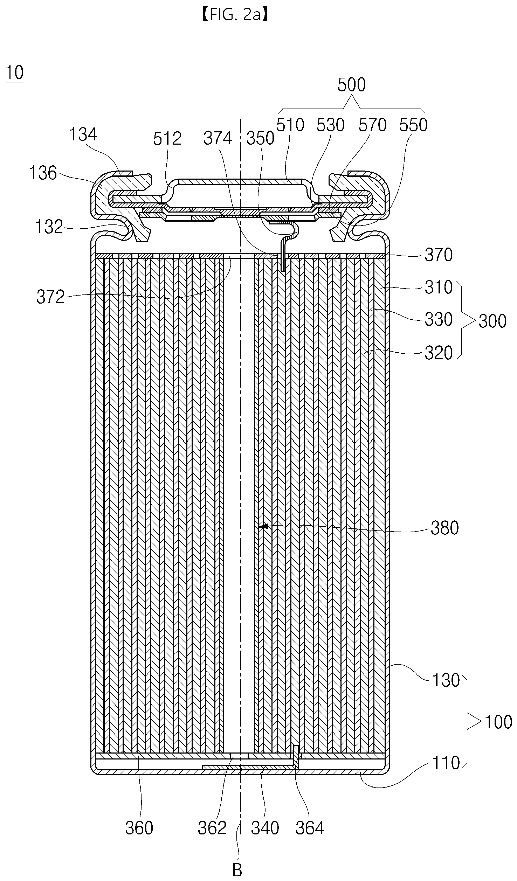

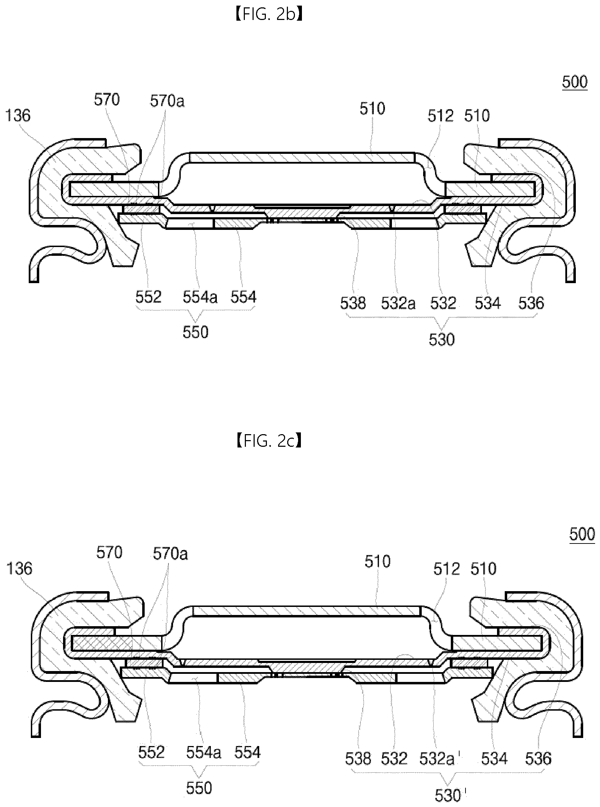

FIG. 1 is a perspective view illustrating a cylindrical secondary battery according to one embodiment of the present disclosure. FIG 2A is a cross-sectional view of the cylindrical secondary battery of FIG. 1. FIG. 2B is an enlarged partial view of FIG. 2A. FIG. 2C is a partial cross-sectional view illustrating a cylindrical secondary battery according to another embodiment.

As shown in FIGS. 1 and 2A, a cylindrical secondary battery 10 according to a first embodiment of the present disclosure may include a can 100 having a cylindrical shape, an electrode assembly 300 accommodated in (e.g., inserted into) the can 100, a cap assembly 500 in (e.g., inserted into) one end portion of the can 100, and an insulating gasket 136 between the can 100 and the cap assembly 500. The electrode assembly 300 may be supported by a center pin 380. The center pin 380 may have a cylindrical shape.

The can 100 includes a bottom portion 110 having a circular shape and a side portion 130 extending upward from the bottom portion 110, and the side portion 130 has an open upper portion (hereinafter referred to as an opening). The can 100 may be made of steel, a steel alloy, nickel-plated steel, a nickel-plated steel alloy, aluminium, an aluminium alloy, or an equivalent thereof, but a material thereof is not limited thereto. The cap assembly 500 is inserted into the opening of the can 100. A beading part 132 and a crimping part 134 may be formed on the side portion 130 (e.g. the upper portion of the side portion 130) such that the inserted cap assembly 500 does not fall out (e.g., deviate to the outside) through the opening of the can 100.

The beading part 132 is formed below the cap assembly 500 and has a shape that is recessed into (i.e., projecting inward into an interior of) the can 100. The crimping part 134 is formed above the cap assembly 500 and has a shape that is bent into the can 100. Because the beading part 132 and the crimping part 134 hold the cap assembly 500 at an upper side and a lower side, the cap assembly 500 is secured to the can 100 (i.e., the beading part 132 and the crimping part 134 are configured to prevent the cap assembly 500 from separating from the can 100). In a manufacturing process of the secondary battery 10, the electrode assembly 300 may be inserted into the can 100 together with an electrolyte through the opening of the can 100.

The electrode assembly 300 includes a negative electrode plate 310, a positive electrode plate 320, and a separator 330. A negative electrode active material (for example, graphite or carbon) may be formed on both surfaces of the negative electrode plate 310. A positive electrode active material (for example, a transition metal oxide (LiCoO₂, LiNiO₂, LiMn₂O₄, or the like)) may be formed on both surfaces of the positive electrode plate 320. The separator 330 is disposed between the negative electrode plate 310 and the positive electrode plate 320 to prevent a short circuit and enable only movement of lithium ions. The negative electrode plate 310, the positive electrode plate 320, and the separator 330 may be wound in an approximately cylindrical shape and accommodated in the can 100. The negative electrode plate 310 may be a copper (Cu) or nickel (Ni) foil, the positive electrode plate 320 may be an aluminium (Al) foil, and the separator 330 may be made of polyethylene (PE) or polypropylene (PP), but the present disclosure is not limited to the above materials. A negative electrode tab 340 protruding and extending downward by a certain length may be welded to the negative electrode plate 310, and a positive electrode tab 350 protruding upward by a certain length may be welded to the positive electrode plate 320. In one or more embodiments, the negative electrode tab 340 may extend upward and the positive electrode tab 350 may extend downward. The negative electrode tab 340 may be made of a copper or nickel material, and the positive electrode tab 350 may be made of an aluminium material, but the present disclosure is not limited to the above materials. The negative electrode tab 340 may be welded to the bottom portion 110 of the can 100, and in this case, the can 100 may operate as a negative electrode. In one or more embodiments, the positive electrode tab 350 may be welded to the bottom portion 110 of the can 100, and in this case, the can 100 may operate as a positive electrode. In the present embodiment, an example in which the negative electrode tab 340 is welded to the bottom portion 110 of the can 100 is shown in the drawing.

In addition, a first insulating plate 360 and a second insulating plate 370 may be disposed below and above, respectively, the electrode assembly 300. The first insulating plate 360 prevents the positive electrode plate 320 from being in electrical contact with the bottom portion 110 of the can 100, and the second insulating plate 370 prevents the negative electrode plate 310 from being electrical contact with the cap assembly 500.

A first hole 362 communicating with the center pin 380 and a second hole 364 through which the negative electrode tab 340 may pass may be formed in the first insulating plate 360. If a large amount of gas is generated due to an abnormality of the secondary battery 10, the first hole 362 allows the gas to move upward through the center pin 380. The negative electrode tab 340 may pass through the second hole 364 to be welded to the bottom portion 110.

A first hole 372, through which gas may move to the cap assembly 500 if a large amount of gas is generated due to an abnormality of the secondary battery 10, may be formed in the second insulating plate 370. In addition, a second hole 374 through which the positive electrode tab 350 may pass is formed to pass through the second insulating plate 370. The positive electrode tab 350 may pass through the second hole 374 and be welded to a cap-down 550 (to be described below). A plurality of second holes 374 may be formed to serve as inlets through which an electrolyte is injected into the electrode assembly 300 in an electrolyte injection process.

Alternatively, although not shown in the drawing, other current collection structures may be applied to the secondary battery of the present embodiment. That is, a negative electrode uncoated portion and a positive electrode uncoated portion, on which an active material is not applied, may be formed on a negative electrode plate and a positive electrode plate, respectively, and a current collector plate electrically connected to each of the negative electrode uncoated portion and the positive electrode uncoated portion may be provided. In such an embodiment, the current collector plate may be provided at a position of the above-described insulating plate 370. In such an embodiment, a negative current collector may be electrically connected to the can, and a positive current collector may be electrically connected to the cap assembly and insulated from the can.

The center pin 380 may have a hollow circular pipe shape (e.g., a hollow cylindrical shape) and may be coupled to approximately the center of the electrode assembly 300. The center pin 380 may be made of steel, a steel alloy, nickel-plated steel, a nickel-plated steel alloy, aluminium, an aluminium alloy, or polybutylene terephthalate, but a material thereof is not limited thereto. The center pin 380 serves to suppress deformation of the electrode assembly 300 during charging/discharging of the secondary battery 10 and serves as a passage for gas generated inside the secondary battery 10. In some cases, the center pin 380 may be omitted.

Additionally, as shown in FIGS. 1 to 2B, the cap assembly 500 may include a cap-up 510 exposed to the outside of the can 100, the cap-down 550 disposed below the cap-up 510, a vent plate 530 disposed between the cap-up 510 and the cap-down 550, and an insulator 570 disposed between the vent plate 530 and the cap-down 550. In FIGS. 2A-2C, a direction toward the center pin 380 is defined as an inward direction, and a direction away from the center pin 380 is defined as an outward direction.

As shown in FIGS. 2A-2C, the cap-up 510 may be disposed at a top of the cap assembly 500 and may include a piercing hole 512 through which gas generated inside the can 100 is discharged to the outside. The cap-up 510 may have an approximately disk shape, and a portion or region thereof around a central axis B may convexly protrude upward. One or more piercing holes 512 may be formed at a boundary between a disk portion (e.g., an annular portion) and a protruding portion. The remaining portions at which the piercing holes 512 are not formed may be defined as bridges between the disk portion and the protruding portion. A detailed structure of the cap-up 510 will be described below. The vent plate 530 may be disposed below the cap-up 510 and may be coupled to the cap-up 510 in a shape surrounding an edge of the cap-up 510.

As shown in FIGS. 2A and 2B, the vent plate 530 has an approximately disk shape, and an edge thereof (e.g., a periphery) is bent toward the edge of the cap-up 510 to be in contact with a lower portion of the edge of the cap-up 510. The vent plate 530 may be bent again toward the inside of the can 100 around a portion in contact with the cap-up 510 to be in contact with an upper portion of the edge of the cap-up 510. An unbent disk portion of the vent plate 530 is defined as a vent bottom portion 532, a portion bent from the vent bottom portion 532 toward the cap-up 510 is defined as a first support portion 534, and a portion bent inward from the first support portion 534 is defined as a second support portion 536. Together, the first support portion 534 and the second support portion 536 of the vent plate 530 wrap around an edge of the cap-up 510. A portion protruding convexly downward from the vent bottom portion 532 to be in contact with the cap-down 550 is defined as a contact portion 538. The vent plate 530 is formed such that all regions except for the contact portion 538 are not in contact with the cap-down 550. One or more notches 532a may be formed in the vent bottom portion 532 of the vent plate 530. For example, the notch 532a may be formed in a circular shape in the vent bottom portion 532. In some embodiments, as shown in FIG. 2C, notches 532a' may be formed in a vent bottom portion 532' and may be formed to correspond to positions of sub-bridges 516 of the cap-up 510 to be described below (e.g., the notch 532a' is shown as corresponding to a position of the piercing hole 512 in the cross-sectional view). At least some or all of the notches 532a' may be formed to correspond to the positions of the sub-bridges 516 of the cap-up 510. If the gas pressure inside the can 100 is greater than a preset fracture pressure and the vent plate 530 is inverted upward, the notch 532a may be fractured. Accordingly, the gas inside the can 100 may be quickly discharged to the outside through the piercing hole 512 of the cap-up 510.

As shown in FIGS. 2A and 2B, the cap-down 550 is disposed below the vent plate 530 and has an approximately disk shape. For example, the cap-down 550 may be made of aluminium, an aluminium alloy, or an equivalent, but a material thereof is not limited thereto. The cap-down 550 serves to support the cap-up 510 and prevent deformation of the cap-up 510 from an external force. An edge of the cap-down 550 is bent toward the vent plate 530, and the insulator 570 is disposed on a bent portion of the cap-down 550. The portion bent toward the vent plate 530 is defined as a third support portion 552. An unbent disk portion of the cap-down 550 is defined as a cap-down bottom portion 554. The cap-down bottom portion 554 may be formed to have a certain separation distance from the vent bottom portion 532 of the vent plate 530. However, an approximately central portion of the cap-down bottom portion 554 is in contact with the contact portion 538 of the vent plate 530. In the cap-down 550, a piercing hole 554a may also be formed in the cap-down bottom portion 554. Accordingly, the internal gas may pass through the piercing hole 554a of the cap-down 550 to be discharged to the outside of the can 100 through the notch 532a of the vent plate 530 and the piercing hole 512 of the cap-up 510.

As shown in FIGS. 2A to 2C, the insulator 570 allows the vent plate 530 (except for the contact portion 538) to maintain a state of being spaced apart from the cap-down 550. The insulator 570 serves to insulate the vent plate 530 and the cap-down 550 from each other. The insulator 570 may be formed in a circular ring shape having a certain width when viewed from above. For example, the insulator 570 may be made of polyethylene (PE), polypropylene (PP), polystyrene (PS), an ethylene-vinyl acetate (EVA) copolymer, or an equivalent thereof, but the present disclosure is not limited thereto. The insulator 570 may be coupled to the vent plate 530 and the cap-down 550 through a method including ultrasonic welding, laser welding, fusion, or the like.

In a secondary battery having such a configuration, a cap-up should have a compressive strength sufficient to not block a gas discharge passage (piercing hole) if pressure is applied from the outside. If the compressive strength is too low, all bridges are fractured during internal gas discharge, which is advantageous in discharging gas. However, if pressure is applied from the outside, the cap-up may be crushed and the gas discharge passage (piercing hole) may be blocked, and thus gas discharging may be blocked. If the compressive strength is too high, the bridge is not fractured when gas inside the secondary battery is discharged (e.g., compressive strength is 33 kgf if only three main bridges are provided). Therefore, because internal gas can be discharged only through the piercing hole, it is difficult to quickly discharge the gas. Therefore, it is necessary to secure a passage for quick discharge if the internal gas is discharged, while maintaining appropriate compressive strength. For example, in the case of a secondary battery with a diameter of 18 phi(ø) to 21 phi(ø), compressive strength should be maintained to a minimum of 15 kgf. Therefore, the present disclosure proposes a secondary battery in which an angle, length, and/or number of cap-up bridges are controlled to maintain appropriate compressive strength and also secure an internal gas discharge passage.

Hereinafter, a structure of a cap-up according to various embodiments of the present disclosure will be described in detail.

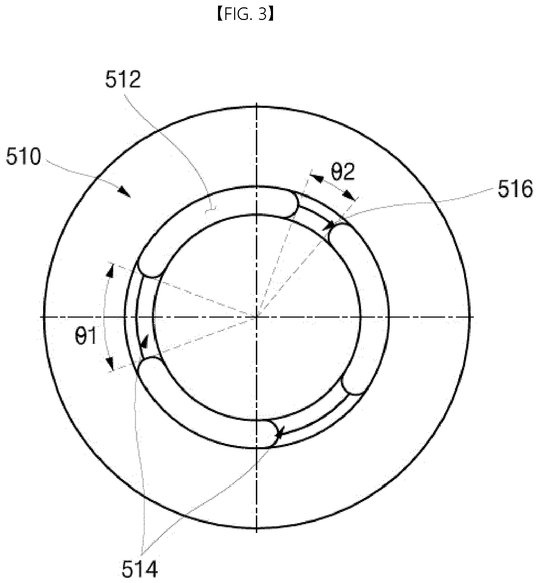

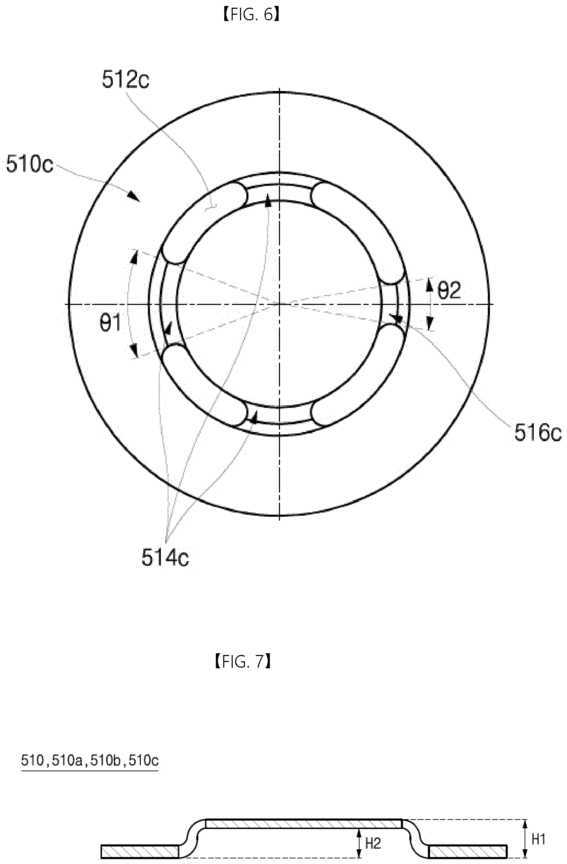

FIGS. 3 to 6 are plan views illustrating cap-ups according to various embodiments of the present disclosure. FIG. 7 is a side cross-sectional view of the cap-up of FIGS. 3 to 6.

As shown in FIGS. 3 to 6, the cap-ups according to various embodiments of the present disclosure may each include one or more main bridges and one or more sub-bridges.

First, as shown in FIG. 3, a cap-up 510 according to one embodiment of the present disclosure may include three piercing holes 512, and two main bridges 514 and one sub-bridge 516 formed between the piercing holes 512 (i.e., a main bridge 514 or a sub-bridge 516 between each adjacent pair of piercing holes 512). In this embodiment, the two main bridges 514 and the one sub-bridge 516 may be spaced apart from each other at equal (or substantially equal) intervals. Alternatively, the main bridges 514 and the sub-bridge 516 may be spaced apart from each other at different (irregular) intervals. In a plan view, the cap-up 510 has a circular shape, and the piercing hole 512 has an arc shape. Based on an imaginary center point of the cap-up 510, the main bridge 514 and the sub-bridge 516 may have an arc shape having the same center point as the piercing holes 512 (but, both ends of the main bridges 514 and the sub-bridge 516 have a concave shape inward in an arc direction). In addition, a radial width of the main bridge 514 and the sub-bridge 516 may be equal (or substantially equal) to a radial width of the piercing holes 512. Based on the imaginary center point of the cap-up 510, an angle θ1 between both ends (opposite ends) of the main bridge 514 (hereinafter referred to as an angle of the main bridge) is greater than an angle θ2 between both ends (opposite ends) of the sub-bridge 516 (hereinafter referred to as an angle of the sub-bridge). That is, each of the main bridges 514 is longer in an arcuate (circumferential) direction than the sub-bridge 516. As used in the present disclosure, a bridge having a relatively larger angle between both ends among a plurality of bridges may be defined as a main bridge. This is equally applied to other embodiments. That is, the cap-up 510 of FIG. 3 includes two main bridges 514 and one sub-bridge 516 having an angle that is less than that of each of the main bridges 514. In one or more embodiments, each of the two main bridges 514 may be twice (or approximately) twice as long as the sub-bridge 516 in the arcuate (circumferential) direction. For example, the angle θ1 of the main bridge 514 may be 40 degrees (or approximately 40 degrees), and the angle θ2 of the sub-bridge 516 may be 20 degrees (or approximately 20 degrees).

Additionally, the compressive strength of the cap-up 510 may be measured or determined based on H1 or H2 of FIG. 7. H1 denotes a height from a lower surface to an upper surface of the cap-up 510, and H2 denotes a height from the lower surface to an upper inner surface of the cap-up 510. H1 or H2 before an external force is applied may be compared with H1 or H2 after the external force is applied through compressive strength measuring equipment. A degree of pressure at which H1 or H2 is reduced (contracted) may be measured to calculate the compressive strength of the cap-up 510. In the present embodiment, the compressive strength of the cap-up 510 may be approximately 25 kgf. That is, the cap-up 510 of the present embodiment can maintain a compressive strength that is greater than or equal to the minimum compressive strength with the two main bridges 514. In addition, if internal gas is discharged, the sub-bridge 516 is fractured to connect the adjacent piercing holes 512 to widen a gas discharge passage. Therefore, the internal gas can be quickly discharged. If the sub-bridge 516 is fractured such that the adjacent piercing holes 512 are connected to each other, a shape of the gas discharge passage becomes closer to a straight line, which shortens a discharging time and is advantageous in discharging. Accordingly, if the sub-bridge 516 is fractured, gas can be quickly discharged through a passage which is closer to a straight line and is wider as compared with an embodiment in which gas is discharged through only the piercing hole 512. To this end, at least some of the above-described notches 532a may also be formed to correspond to positions of the sub-bridges 516.

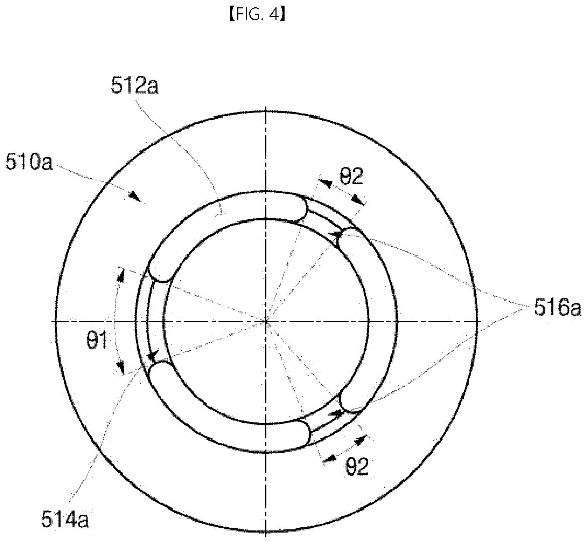

Next, as shown in FIG. 4, a cap-up 510a according to one embodiment of the present disclosure may include three piercing holes 512a, and one main bridge 514a and two sub-bridges 516a formed between the piercing holes 512a. In this embodiment, the one main bridge 514a and the two sub-bridges 516a may be spaced apart from each other at equal (or substantially equal) intervals. The main bridge 514a and the sub-bridges 516a of FIG. 4 may have the same shape and size as those of the embodiment of FIG. 3. For example, an angle θ1 of the main bridge 514a may be 40 degrees (or approximately 40 degrees), and an angle θ2 of each of the sub-bridges 516a may be 20 degrees (or approximately 20 degrees) (i.e., the main bridge 514a may be approximately twice as long as each of the sub-bridges 516a in the arcuate (circumferential) direction). In this embodiment, compressive strength of the cap-up 510a may be approximately 23 kgf. That is, the cap-up 510a of the present embodiment can maintain a compressive strength that is greater than or equal to the minimum compressive strength with one main bridge 514a. Also, if internal gas is discharged, the two sub-bridges 516a may be fractured (such that the adjacent piercing holes 512a are connected to each other) so that the internal gas can be quickly discharged.

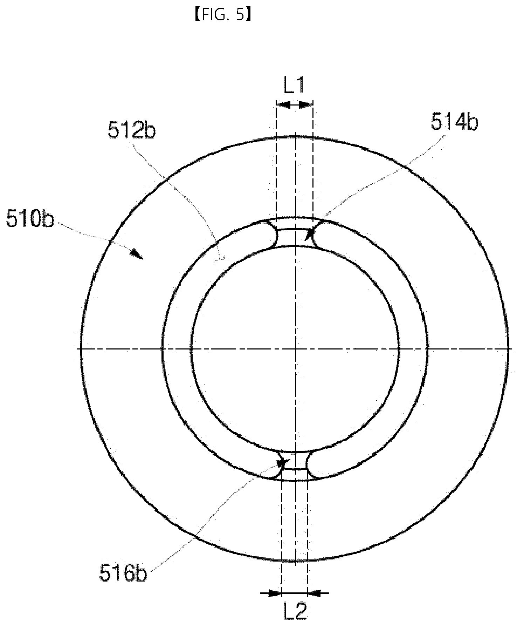

Next, as shown in FIG. 5, a cap-up 510b according to one embodiment of the present disclosure may include two piercing holes 512b and one main bridge 514b and one sub-bridge 516b formed to face each other between the piercing holes 512b (e.g., the one main bridge 514b and the one sub-bridge 516b are diametrically opposed). That is, the main bridge 514b and the sub-bridge 516b may be disposed to face each other. The main bridge 514b and the sub-bridge 516b of FIG. 5 may have the same shape as those of the embodiment of FIG. 3. For example, a width L1 (interval between both ends) of the main bridge 514b in an arc direction (circumferential direction) may be approximately 2 mm (approximately 0.08 inch) (an angle between both ends is about 22 degrees), and a width L2 (interval between both ends) of the sub-bridge 516b in the arc direction may be approximately 1.25 mm (0.05 inch) (an angle between both ends is about 13 degrees). In this embodiment, the compressive strength of the cap-up 510b may be approximately 15 kgf. That is, the cap-up 510b of the present embodiment can maintain the minimum compressive strength with one main bridge 514b. Also, if internal gas is discharged, one sub-bridge 516b may be fractured (such that the adjacent piercing holes 512b are connected to each other) so that the internal gas can be quickly discharged.

Next, as shown in FIG. 6, a cap-up 510c according to one embodiment of the present disclosure may include four piercing holes 512c, and three main bridges 514c and one sub-bridge 516c formed between the piercing holes 512c. In this embodiment, the three main bridges 514c and the one sub-bridge 516c may be spaced apart from each other at equal (or substantially equal) intervals. The main bridges 514c and the sub-bridge 516c of FIG. 6 may have the same shape as those of the embodiment of FIG. 3. For example, an angle θ1 of the main bridge 514c may be 40 degrees (or approximately 40 degrees), and an angle θ2 of the sub-bridge 516c may be 20 degrees (or approximately 20 degrees) (i.e., each of the main bridges 514c may be approximately twice as long as the sub-bridge 516c in the arcuate (circumferential) direction). In this embodiment, the compressive strength of the cap-up 510c may be approximately 30 kgf. That is, the cap-up 510c of the present embodiment can maintain a compressive strength that is greater than or equal to the minimum compressive strength with three main bridges 514c. Also, if internal gas is discharged, the sub-bridge 516c may be fractured (such that the adjacent piercing holes 512c on opposite sides of the sub-bridge 516c are connected to each other) so that the internal gas can be quickly discharged.

As described above, the bridges of the general cap-up have the same shape and are symmetrical to each other, but the embodiments of the present disclosure are characterized in that the main bridges and the sub-bridges are asymmetrical to each other. A main bridge serves to maintain a necessary compressive strength so as not to block a gas discharge passage. A sub-bridge is fractured during gas discharge so that gas is vertically elevated from an electrode assembly and is discharged. Accordingly, reliability can be secured during a passive propagation resistance (PPR) test (PPR test-thermal stability evaluation that evaluates a degree of propagation/affect to neighboring cells in the event of a fire in a battery module/pack).

According to embodiments of the present disclosure, compressive strength of a cap-up can be adjusted by controlling an angle, width, and number of main bridges and sub-bridges of the cap-up. Accordingly, a gas discharge passage can be obtained.

In addition, reliability can be improved during a PPR test.

While the foregoing embodiments are only embodiments for carrying out the present disclosure, which is not limited to the embodiments, it will be understood by a person skilled in the art that various changes in form and details may be made therein without departing from the scope of the present disclosure as defined by the following claims.

## Claims

1. A cylindrical secondary battery comprising:
an electrode assembly;
a can having a cylindrical shape accommodating the electrode assembly; and
a cap assembly coupled to the can, electrically connected to the electrode assembly, and insulated from the can, the cap assembly comprising a cap-up exposed to an outside, a cap-down supporting the cap-up, and an insulator comprising an insulating material between the cap-up and the cap-down,
wherein the cap-up comprises a plurality of piercing holes and a plurality of bridges between the plurality of piercing holes, and
wherein the plurality of bridges have two or more different angles or two or more different widths.

2. The cylindrical secondary battery of claim 1, wherein the plurality of bridges comprises one or more main bridges and one or more sub-bridges.

3. The cylindrical secondary battery of claim 1 or claim 2, wherein the plurality of bridges comprises a plurality of main bridges and a smaller number of sub-bridges than the plurality of main bridges.

4. The cylindrical secondary battery of claim 1 or claim 2, wherein the plurality of bridges comprises a plurality of sub-bridges and a smaller number of main bridges than the plurality of sub-bridges.

5. The cylindrical secondary battery of any one of claims 2 to 4, wherein an angle between ends of a main bridge of the one or more main bridges or the plurality of bridges is greater than an angle between ends of a sub-bridge of the one or more sub-bridges or the plurality of sub-bridges.

6. The cylindrical secondary battery of claim 5, wherein the plurality of main bridges and the plurality of sub-bridges are spaced apart from each other at equal intervals.

7. The cylindrical secondary battery of claim 5, wherein the plurality of main bridges and the plurality of sub-bridges are spaced apart from each other at different intervals.

8. The cylindrical secondary battery of any one of claims 5 to 7, wherein the cap assembly further comprises a vent plate between the cap-up and the cap-down, the vent plate being spaced apart from the cap-down and having one or more notches.

9. The cylindrical secondary battery of claim 8, wherein at least some of the one or more notches are correspond to positions of the sub-bridges.
